# EUROPEAN PATENT APPLICATION

(11) **EP 1 114 954 A2**
(43) Date of publication of application: **11.07.2001**
(21) Application number: 01300072.4
(22) Date of filing: 05.01.2001
(51) Int. Cl.: F16K 1/42

(54) **Two-port valve**

(30) Priority: 06.01.2000 JP 2000000875
(71) Applicant: SMC CORPORATION, Minato-ku, Tokyo (JP)
(72) Inventor: Tokuda, Tetsuro, c/o SMC Corp Tsukuba Tech Center, Tsukuba-gun, Ibaraki (JP); Sakurai, Toyonobu, SMC Corp Tsukuba Tech Center, Tsukuba-gun, Ibaraki (JP); Suzuki, Hiroaki, c/o SMC Corp Tsukuba Tech Center, Tsukuba-gun, Ibaraki (JP)
(74) Representative: Findlay, Alice Rosemary

(57) **Abstract**

There is provided a two-port valve which has excellent durability and airtightness and can be easily processed with high accuracy and in which a valve seat can be easily replaced. For this purpose, a valve seat 8 is formed separately from a valve body 4 of a main valve and the valve body 4 is provided with a mounting portion 9 on which the valve seat 8 is seated. The mounting portion 9 is formed of an annular stepped portion including a bottom wall 41 and an outer peripheral wall 42. The bottom wall 41 is provided with a groove portion into which a sealant 44 is mounted and the outer peripheral wall 42 is provided in a vicinity of an upper portion thereof with a groove portion into which a snap ring 47 is mounted. The valve seat 8 is held pressed against the sealant 44 by the snap ring 47.

## Description

The present invention relates to a two-port valve for allowing and preventing passage of fluid such as air, oil, water, and steam.

There is a known pilot-type two-port valve in which a pilot valve is switched to supply or discharge pressure fluid to and from a pressure operating chamber on one side of a pressure-receiving body, such as a piston or a diaphragm, to move the pressure-receiving body and a valve member connected to the pressure-receiving body through a valve stem. Movement of the valve member opens and closes a valve seat thereby connecting and separating an input port and an output port for the pressure fluid to and from each other.

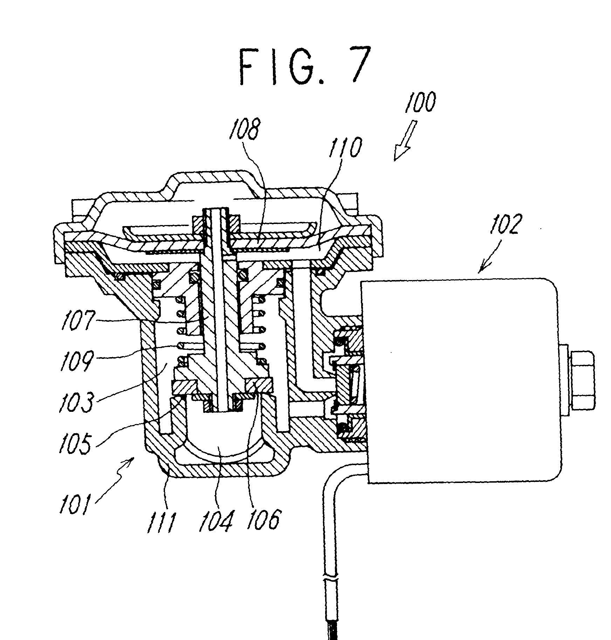

An example of this known pilot-type two-port valve 100 is shown in FIG. 7. The valve 100 includes a main valve 101 having an input chamber 103 into which pressure fluid is introduced from an input port, an output port 104, a valve seat 105 in a flow path connecting the ports, and a valve member 106 for opening and closing the valve seat 105 and a pilot valve 102. In the main valve 101, the valve seat 105 is opened and closed by moving the valve member 106 up and down through a valve stem 107. A pressure-receiving body (a diaphragm in this example) 108 is secured to the valve stem 107 and the valve stem 107 is constantly pushed in a valve-closing direction by a return spring 109. The pressure-receiving body 108 is moved up and down by supplying and discharging the pressure fluid to and from the pressure operating chamber 110 by the pilot valve 102.

However, because the valve seat 105 is formed integrally with a valve body 111 of the main valve 101 in this type of pilot-type two-port valve 100, the problems described below at (1) to (3) arise.

Furthermore, similar problems arise with a known pilot-type two-port valve in which the valve seat is formed separately but is screwed down or fitted into the valve body and with a two-port valve that is not of the pilot type.
(1) It is impossible to select suitable material for the valve seat that is different from the material of the valve body and durability and airtightness are poor.
(2) Because the valve body is larger than the valve seat, processing is hard and cannot be carried out with high accuracy (this problem is especially acute in the case of integral molding).
(3) If a flaw or deformation is generated in the valve seat, the valve body of the main valve has to be replaced, which is disadvantageous in terms of economy and resource savings.

It is an object of the present invention to provide a two-port valve in which the material of the valve seat can be selected properly, which has excellent durability and airtightness, and which can be processed easily with high accuracy.

It is another object of the present invention to provide a two-port valve having a mounting structure in which a valve seat can be mounted with excellent airtightness and can be replaced easily.

A two-port valve of the invention comprises a valve body including an input port and an output port for pressure fluid, a valve seat in a flow path connecting the ports, and a valve member for opening and closing the valve seat. The valve seat is formed separately from the valve body, the valve body having a mounting portion to which the valve seat is mounted. The mounting portion is formed of an annular stepped portion including a bottom wall and an outer peripheral wall, the bottom wall having a first groove in which a seal is mounted, and the outer peripheral wall having a second groove into which a snap ring is mounted. The valve seat is pushed against the seal mounted in the first groove by the snap ring mounted in the second groove.

In one embodiment, the annular valve seat has on an upper face thereof a seat portion with which the valve member comes into contact, a sealing face on a bottom face which contacts the seal, and a stepped portion, and the valve seat is mounted to the mounting portion by engaging the snap ring with the stepped portion.

A notch portion for housing bent portions at opposite ends of the snap ring may be provided in the outer peripheral wall of the annular stepped portion.

The two-port valve may be a pilot-type two-port valve for driving a valve member with pilot fluid pressure, the valve member being connected to a piston and a pressure operating chamber to and from which the pilot fluid pressure is supplied and discharged being formed on one side face of the piston.

In the two-port valve, the seal, for which the term sealant is used hereinafter, is mounted in the groove in the bottom wall of the mounting portion and the valve seat is seated on the bottom wall against the sealant. Then, the diameter of the snap ring is reduced so that the bent portions of the snap ring are aligned with the notch portion of the outer peripheral wall of the mounting portion. The valve seat is pushed down by the reduced diameter snap ring and pressed against the sealant. The snap ring is located in the groove in the outer peripheral wall and released to mount the snap ring in the groove in the outer peripheral wall.

As a result, the valve seat is locked by the snap ring in a state in which the valve seat presses against the sealant mounted into the groove.

By reversing the mounting operations, the valve seat can be detached from the mounting portion of the valve body.

As described above, in the two-port valve or the pilot-type two-port valve of the invention, the valve seat is formed separately from the valve body of the main valve, the valve seat can be easily mounted and detached, and the valve seat is reliably sealed by the sealant provided to the mounting portion of the valve body.

The invention will now be further described by way of example with reference to the accompanying drawings in which:

FIG. 1 is a vertical sectional view of part of an embodiment of a valve in accordance with the invention.

FIG. 2 is an exploded view of a valve seat that is an element of the valve.

FIG. 3 is an enlarged sectional view of the valve seat after assembly.

FIG. 4 is a plan view of the valve seat after assembly.

FIG. 5 is a view taken in a direction of an arrow V-V in FIG. 4.

FIG. 6 is a perspective view of a snap ring.

FIG. 7 is a vertical sectional view of a known pilot-type two-port valve.

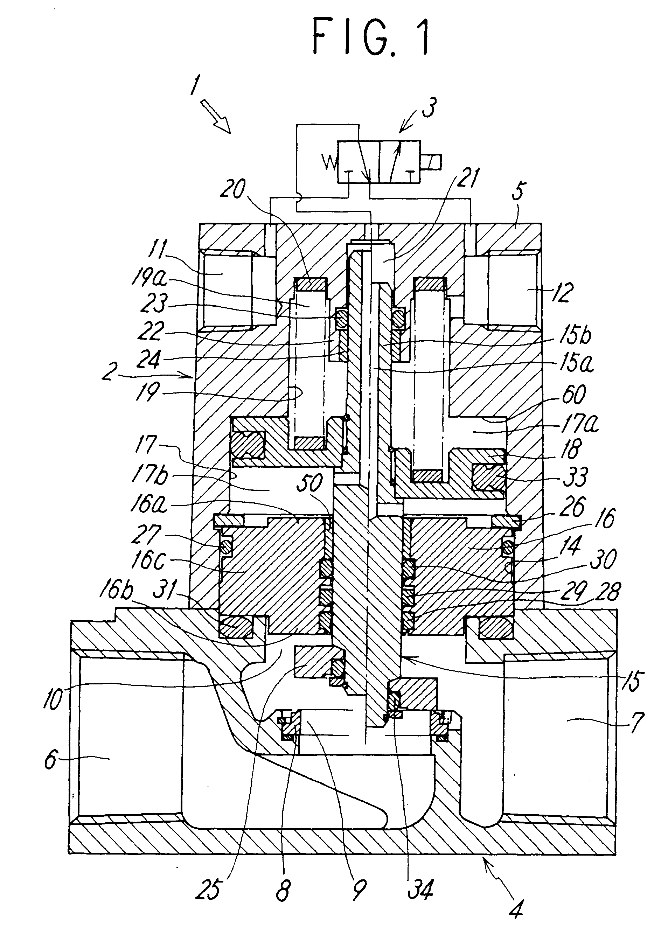

FIG. 1 is a vertical sectional view of an embodiment of a pilot-type two-port valve shown on the left side of the center line in an open state and on the right side in a closed state.

The pilot-type two-port valve 1 includes a main valve (two-port valve) 2 and a pilot valve 3 mounted to the main valve 2. The main valve 2 has a valve body 4, a cover 5 airtightly mounted to the valve body 4, a piston 18 for sliding in the cover 5, and a valve member 25 mounted to a shaft 15 of the piston 18. The valve body 4 has an input port 6 and an output port 7 for pressure fluid, a valve seat 8 provided in a flow path connecting the ports, a mounting portion 9 to which the valve seat 8 formed separately from the valve body 4 is mounted, and an opening 10 provided to open into the cover 5 in a position facing the mounting portion 9, and the valve member 25 for opening and closing the valve seat 8 is mounted in a flow path of the valve body. The cover 5 has a space portion 17 for housing the piston 18 and the shaft 15 and a pilot port 11 and a breathing port 12 are provided to a vicinity of an upper portion of the cover 5.

A lower portion of the space portion 17 formed in the cover 5 opens into the opening 10 of the valve body 4 and a spacer 16 having a through hole through which the shaft 15 passes is housed airtightly in a mouth portion 14 on the open side.

The piston 18 secured airtightly to the shaft 15 is housed in the space portion 17 above the spacer 16. An outer peripheral wall of the space portion 17 functions as a cylindrical face on which the piston 18 slides airtightly. A spring chamber 17a is formed above the piston 18 and a pressure operating chamber 17b is formed between the piston 18 and an upper face of the spacer 16.

A circular ceiling portion 60 having a depression 19 at a center of the ceiling portion 60 is formed above the space portion 17. The ceiling portion 60 limits an upward movement position of the piston 18 and a partition 22 in a shape of a hollow cylinder is formed to project from an upper portion of the depression 19. A space portion 21 in the partition 22 is a space portion into which an extending portion 15b of the shaft 15 is fitted and inserted and a bearing 24 for guiding the shaft 15 and a sealant 23 for sealing a periphery of the shaft 15 are provided to the partition 22 at an outer periphery of the space portion 21.

An annular space portion 19a is formed between the partition 22 and an outer peripheral wall of the depression 19 and a return spring 20 for acting on and constantly biasing the piston 18 downward is housed in the depression 19 including the annular space portion 19a.

The spacer 16 is in a cylindrical shape having small-diameter portions 16a and 16b in vicinities of upper and lower end portions of the cylinder, a large-diameter portion 16c between the small-diameter portions 16a and 16b, and a through hole in a central portion of the cylinder. The lower small-diameter portion 16b is inserted into the opening 10 of the valve body. A lower end face of the large-diameter portion 16c is supported by a body wall at a periphery of the opening 10 and sealed by a sealant 31 mounted in an annular groove on the body wall provided to surround the opening 10. An upper end face of the large-diameter portion 16c is positioned by a snap ring 26 mounted in an annular groove portion in an upper portion of the mouth portion 14. An annular groove in which a sealant 27 is to be mounted is formed in an outer peripheral face of an upper portion of the large-diameter portion 16c. On the other hand, a bearing 50 for guiding the shaft 15 is mounted in a vicinity of an upper end of a peripheral wall of the through hole through which the shaft 15 passes. Annular grooves in which sealants 28, 29, and 30 are to be mounted are respectively formed between a lower end of the peripheral wall of the through hole and the bearing 50 and the annular sealants 28, 29, and 30 are respectively mounted in the respective annular grooves.

The sealant 27 is a sealant for separating the pressure operating chamber 17b and outside air from each other. The sealant 28 is a sealant (scraper) for scraping off filth and the like deposited on the shaft. The sealant 29 is a sealant for preventing entry of fluid from the valve body side. The sealant 30 is a sealant for sealing pressure in the pressure operating chamber 17b.

The shaft 15 has a smaller diameter on an upper side of a portion where the piston 18 is mounted than at a portion where the shaft 15 passes through the spacer 16.

An upper portion of the shaft 15 is housed in the space portion 21 and a lower portion of the shaft 15 passing through the spacer 16 and extending into the valve body 4 has a reduced diameter and is airtightly mounted with the valve member 25 for opening and closing the valve seat 8 through a sealant 34.

Piston packing 33 is mounted to a periphery of the piston 18, the spring chamber 17a above the piston 18 communicates with the breathing port 12, and the pressure operating chamber 17b communicates with the space portion 21 through a through hole 15a formed in the shaft 15. If the pilot valve 3 is mounted onto the cover 5, the space portion 21 communicates with the pilot port 11 or the breathing port 12 through the pilot valve 3 as shown in FIG. 1.

If the space portion 21 is separated from the breathing port 12 and communicates with the pilot port 11 simultaneously by switching of the pilot valve 3, pressure fluid from the pilot port 11 is supplied to the pressure operating chamber 17b through the through hole 15a. Therefore, the piston 18 is pushed up by the pressure fluid against spring force of the return spring 20. As a result, the valve member 25 moves upward through the shaft 15 to which the piston 18 is secured. Thus, the valve seat 8 opens and the pressure fluid in the input port 6 flows into the output port 7.

On the other hand, if the space portion 21 is separated from the pilot port 11 and communicates with the breathing port 12 by switching of the pilot valve 3, the pressure fluid in the pressure operating chamber 17b flows out from the breathing port 12 through the through hole 15a and the space portion 21. Therefore, the piston 18 is pushed down by the spring force of the return spring 20. As a result, the valve member 25 moves downward through the shaft 15 to which the piston 18 is secured. Thus, the valve seat 8 closes and the pressure fluid in the input port does not flow into the output port.

Although the space portion 21 is connected to the pilot port 11 or the breathing port 12 by providing the pilot valve 3 onto the cover 5 in the embodiment, the pilot-type two-port valve is not necessarily limited to this.

For example, it is also possible to introduce pilot fluid pressure into the pilot port 11 from outside through a three-port valve (not shown). In this case, the pilot port 11 merely has to be connected to the space portion 21 and the pilot valve 3 and the flow path of the pilot valve 3 shown in FIG. 1 may be omitted. Because the pressure fluid in the space portion 21 is supplied and discharged by switching the tree-port valve in this case, it is unnecessary to connect the space portion 21 to the breathing port 12.

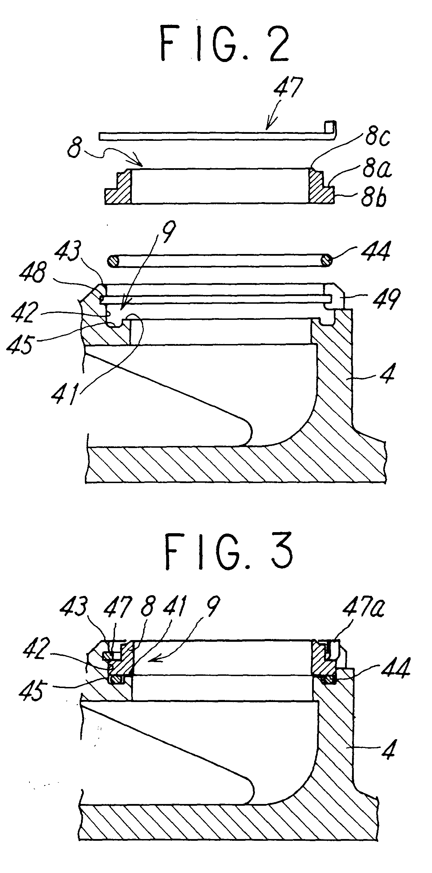

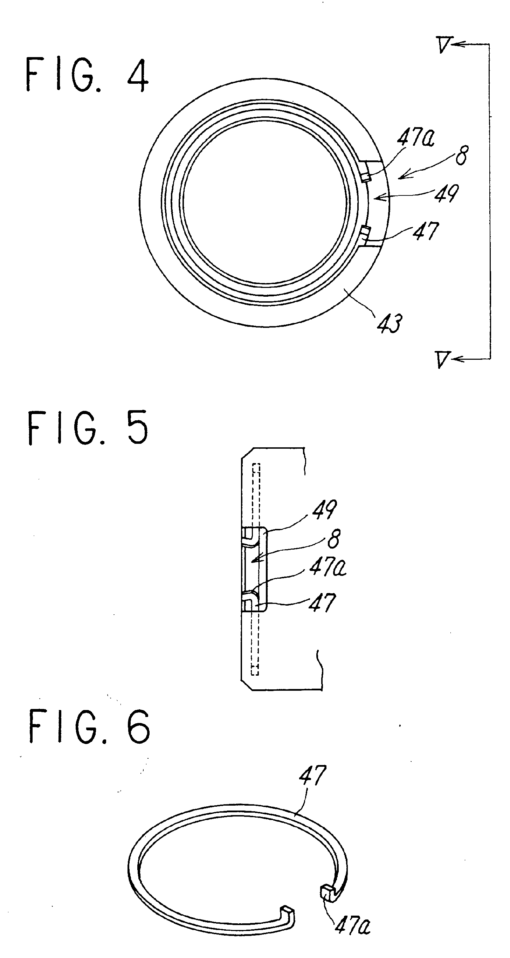

FIGS. 2 to 6 show an embodiment of the valve seat 8 and the mounting portion 9. FIG. 2 is an exploded view of the valve seat, FIG. 3 is an enlarged sectional view of the valve seat after assembly, FIG. 4 is a plan view of an assembled state, FIG. 5 is a view taken in a direction of an arrow V-V in FIG. 4, and FIG. 6 is a perspective view of a snap ring.

The mounting portion 9 to which the valve seat 8 of the valve body 4 is mounted is formed of an annular stepped portion including a bottom wall 41 and an outer peripheral wall 42 surrounding a periphery of the bottom wall. The bottom wall 41 has an annular groove portion 45 into which a sealant 44 is to be mounted. The outer peripheral wall 42 has in a vicinity of an upper portion thereof an annular groove portion 48 into which a snap ring 47 is to be mounted and a notch portion 49 formed by notching a portion of the upper portion of the outer peripheral wall and for housing bent portions 47a formed at open ends of the snap ring 47.

The valve seat 8 is an annular member formed separately from the valve body 4 of the main valve 2 and made of material suitable for use as the valve seat. Although an inner diameter of the valve seat 8 is substantially constant, an outer periphery of the valve seat 8 is formed with a stepped portion 8a. An outer diameter of a large-diameter portion 8b is slightly smaller than the outer peripheral wall 42 so as to be fitted in the outer peripheral wall 42 and a bottom face of the large-diameter portion 8b is a face supported by the bottom wall 41 and comes into contact with the sealant 44 mounted into the groove portion 45 to function as a sealing face that presses the sealant 44. An upper face of the stepped portion 8a is a face pressed by the snap ring 47 mounted into the groove portion 48. A seat portion 8c on an upper face of the valve seat 8 projects further than an upper face 43 of the outer peripheral wall 42 and functions as a sealing portion for the valve member 25 in a state in which the seat portion 8c is mounted to the mounting portion 9.

Assembly of the valve seat 8 is carried out as follows.

In the mounting portion 9 of the valve seat, the annular sealant 44 with a height larger than a depth of the annular groove portion 45 is mounted into the groove portion 45 and the valve seat 8 is seated on the bottom wall 41 mounted with the sealant 44. Then, the snap ring 47 whose diameter is reduced by pinching the bent portions 47a between tools such as pliers in a pair is positioned such that the bent portions 47a are in a position corresponding to the notch portion 49 of the outer peripheral wall 42 and the valve seat 8 is pushed down by the snap ring 47 to press the sealant 44. By increasing the diameter of the snap ring 47 in a position of the groove portion 48, the snap ring 47 is mounted into the groove portion 48 in the outer peripheral wall 42.

As a result, the valve seat 8 is locked by the snap ring 47 while pressing the sealant 44 mounted into the groove portion 45 and while being pushed against the bottom wall 41.

Thus, the valve seat 8 is mounted to the mounting portion 9 of the valve body 4. By carrying out the operations in a reverse order, the valve seat 8 can be detached from the mounting portion 9 of the valve body 4.

As described above, in the pilot-type two-port valve 1, the valve seat 8 is formed separately from the valve body 4 of the main valve 2, seated on the mounting portion 9 formed of the annular stepped portion including the bottom wall 41 and the outer peripheral wall 42, and locked by the snap ring 47 mounted into the groove portion 43 in the outer peripheral wall 42. Therefore, the valve seat 8 can be easily mounted and detached and it is possible to properly select material of the valve seat 8. For example, it is possible to freely select material such as nonferrous material, iron, and synthetic resin or material that has been subjected to plating, heating, or surface hardening processing.

Because it is possible to process the valve seat 8 and the mounting portion 9 in a state in which the valve seat 8 is not mounted, not only processing of especially the valve seat 8 can be carried out easy and with high accuracy, but also processing of the mounting portion 9 can be carried out easily.

If a flaw or deformation is generated in the valve seat 8, only the valve 8 has to be replaced, without replacing the valve body 4, which is advantageous in terms of economy and resource savings.

Furthermore, in the pilot-type two-port valve 1 of the invention, because structures of the valve seat 8 and the mounting portion 9 are simple and the valve seat 8 is reliably sealed by the sealant 44 provided to the mounting portion 9, the pilot-type two-port valve with excellent durability and airtightness can be obtained.

As described above in detail, the present invention can provide the two-port valve of the pilot-type or the like in which the material of the valve seat can be selected properly, the valve has excellent durability and airtightness and can be processed easily and with high accuracy, and the valve seat can be replaced easily.

## Claims

1. A two-port valve comprising a valve body including an input port and an output port for pressure fluid, a valve seat in a flow path connecting the ports, and a valve member for opening and closing the valve seat, wherein the valve seat is formed separately from the valve body, wherein the valve body has a mounting portion to which the valve seat is mounted, the mounting portion being formed of an annular stepped portion including a bottom wall and an outer peripheral wall around the bottom wall, the bottom wall having a first groove in which a seal is mounted, and the outer peripheral wall having a second groove into which a snap ring is mounted, and wherein the valve seat is annular and is placed on the bottom wall of the stepped portion so as to be in contact with the seal mounted into the first groove, and is pushed against the seal by the snap ring mounted into the second groove.

2. A two-port valve as claimed in Claim 1, wherein the annular valve seat has on an upper face thereof a seat portion which the valve member contacts a sealing face on a bottom face thereof which contacts the seal, and a stepped portion between the upper and bottom faces, and wherein the valve seat is mounted to the mounting portion by engaging the snap ring with the stepped portion.

3. A two-port valve as claimed in either Claim 1 or Claim 2, wherein the snap ring is open and has bent end portions and wherein a notch for receiving the bent end portions of the snap ring is provided in the outer peripheral wall of the annular stepped portion.

4. A two-port valve as claimed in any preceding Claim, wherein the two-port valve is a pilot-type two-port valve for driving a valve member with pilot fluid pressure, the valve member is connected to a piston for opening and closing of the valve seat, and a pressure operating chamber to and from which pilot fluid pressure is supplied and discharged is formed on one side face of the piston.
